# EUROPEAN PATENT APPLICATION

(11) **EP 4 790 619 A1**
(43) Date of publication of application: **12.08.2026**
(21) Application number: 24884525.7
(22) Date of filing: 22.10.2024
(51) Int. Cl.: G06Q 10/10

(54) **INFORMATION PUBLICATION METHOD AND SYSTEM, INFORMATION CATEGORY DETERMINATION METHOD, COMMODITY LISTING METHOD, AND DEVICE**

(30) Priority: 02.11.2023 CN 202311453309
(71) Applicant: Hangzhou Alibaba International Internet Industry Co., Ltd., Hangzhou, Zhejiang 310052 (CN)
(72) Inventor: ZHU, Bo, Hangzhou, Zhejiang 311121 (CN); LIU, Kai, Beijing 100020 (CN); ZHAO, Rongxun, Beijing 100020 (CN)
(74) Representative: Wu, Ting
(86) International application number: PCT/CN2024/126526
(87) International publication number: WO 2025/092521

(57) **Abstract**

Embodiments of the present disclosure provide an information publishing, information category determination, and product publishing method, system, and equipment. In the technical solution provided by the embodiments of the present disclosure, multi-modal information of a target object is obtained, and a publishing category to which the target object belongs is determined based on the multi-modal information. This category determination method utilizes the mutual complementarity and mutual cross-verification of multi-modal information, making the publishing category determination result more robust and accurate. Thereafter, target object attribute information can also be automatically mapped to attribute information under the publishing category, realizing automatic attaching of object information and reducing manual attaching operations. In summary, the present solution can determine a suitable publishing category for a target object needing to be published in real time, and automatically attach the attribute information of the target object, improving the degree of automation of information publishing and greatly reducing the manual cost of information publishing, especially when a large batch of information needs to be published, the reduction in manual cost is even more significant.

## Description

The present disclosure claims priority to Chinese Patent Application No. 202311453309.1, filed with the China National Intellectual Property Administration on November 2, 2023, and entitled "Information Publishing, Information Category Determination, and Product Publishing Method, System, and Equipment," the entire content of which is incorporated by reference in the present disclosure.

### TECHNICAL FIELD

The present disclosure relates to the field of e-commerce technology, and in particular, to an information publishing, information category determination, and product publishing method, system, and equipment.

### BACKGROUND

Merchants sell products on e-commerce platforms, and product publishing is an important link for realizing online product sales. In a product publishing process, a merchant needs to select a category to which a product belongs by itself. Manual selection of the category to which the product belongs is time-consuming and has a high error rate, which restricts the efficiency and quality of product publishing. Moreover, once the category to which the product belongs is selected incorrectly, it will have an adverse impact on subsequent promotion and traffic attraction for the product, and in addition, it will bring a poor user experience to consumers.

### SUMMARY

In view of the above problems, the present disclosure provides an information publishing, information category determination, and product publishing method, a product batch publishing method, a system, and equipment for solving or at least partially solving the above problems.

A first embodiment of the present disclosure provides an information publishing method, the method comprising: obtaining at least one reference object related to a target object based on multi-modal information of the target object; determining at least one target category related to the target object based on the multi-modal information of the target object; determining a publishing category to which the target object belongs according to a category to which the at least one reference object belongs and the at least one target category; obtaining target object attribute information corresponding to the publishing category; and performing a publishing operation by using the publishing category and the target object attribute information as publishing information of the target object.

A second embodiment of the present disclosure provides an information category determination method, the method comprising: performing vectorized representation on multi-modal information of a target object to obtain at least two vectors representing the target object; obtaining a plurality of preset vectors, where one preset vector represents one category or one reference object; determining a preset vector related to the target object based on the at least two vectors representing the target object and the plurality of preset vectors; and determining a category to which the target object belongs according to a category represented by the preset vector related to the target object or a category to which the reference object belongs.

A third embodiment of the present disclosure provides an information publishing method, the method comprising: in response to an operation of a user for a target object, obtaining multi-modal information of the target object; displaying a publishing category to which the target object belongs based on the multi-modal information; where the publishing category is determined based on a category to which at least one reference object belongs and/or at least one target category, and the at least one reference object and/or the at least one target category have a correlation with the multi-modal information; and displaying target object attribute information corresponding to the publishing category for verification, and performing a publishing operation for the target object after the verification is passed.

A fourth embodiment of the present disclosure provides a product publishing method, the method comprising: in response to an operation of a merchant for a product, obtaining multi-modal information of the product; displaying a publishing category to which the product belongs based on the multi-modal information; where the publishing category is determined based on a category to which at least one reference product belongs and/or at least one target category, and the at least one reference product and/or the at least one target category have a correlation with the multi-modal information; and displaying product attribute information corresponding to the publishing category for verification, and performing a publishing operation for the product after the verification is passed to publish the product to an e-commerce platform.

A fifth embodiment of the present disclosure provides an information publishing method, the method comprising: in response to an operation of a user for a target object, obtaining multi-modal information of the target object; determining a publishing category to which the target object belongs based on the multi-modal information; where the publishing category is determined based on a category to which at least one reference object belongs and/or at least one target category, and the at least one reference object and/or the at least one target category have a correlation with the multi-modal information; obtaining target object attribute information corresponding to the publishing category; performing a publishing operation for the target object according to the publishing category and the target object attribute information; and displaying a preview page after the target object is published.

A sixth embodiment of the present disclosure provides a product publishing method, the method comprising: in response to an operation of a merchant for a product, obtaining multi-modal information of the product; determining a publishing category to which the product belongs based on the multi-modal information; where the publishing category is determined based on a category to which at least one reference product belongs and/or at least one target category, and the at least one reference product and/or the at least one target category have a correlation with the multi-modal information; obtaining product attribute information corresponding to the publishing category; performing a publishing operation for the product according to the publishing category and the product attribute information; and displaying a preview page after the product is published.

A seventh embodiment of the present disclosure provides a product batch publishing method, the method comprising: in response to an operation of a merchant triggering product batch publishing, obtaining multi-modal information of a plurality of products to be batch-published; determining corresponding publishing information for each of the plurality of products; and performing a batch publishing operation so that the merchant batch-reviews preview pages after the plurality of products are published; where determining corresponding publishing information for one product among the plurality of products comprises: determining a publishing category to which the product belongs based on multi-modal information of the product; where the publishing category is determined based on a category to which at least one reference object belongs and/or at least one target category, and the at least one reference object and/or the at least one target category have a correlation with the multi-modal information of the product; and attaching corresponding product attribute information to the publishing category to which the product belongs according to the multi-modal information of the product to obtain the publishing information of the product.

An eighth embodiment of the present disclosure provides an information publishing system. The system comprises:
a client, configured to send multi-modal information of a target object to a server in response to an operation of a user for the target object;
a server, configured to obtain at least one reference object and/or at least one target category having a correlation with the target object according to the multi-modal information; determine a publishing category to which the target object belongs according to a category to which the at least one reference object belongs and/or the at least one target category; and determine target object attribute information corresponding to the publishing category;
the client, configured to display the publishing category and the target object attribute information corresponding to the publishing category for verification; and in response to a verification pass instruction, trigger the server to perform a publishing operation for the target object based on the publishing category and the target object attribute information corresponding to the publishing category.

A ninth embodiment of the present disclosure provides an information publishing system. The system comprises:
a client, configured to send multi-modal information of a target object to a server in response to an operation of a user for the target object;
the server, configured to: obtain at least one reference object and/or at least one target category having a correlation with the target object based on multi-modal information of the target object; determine a publishing category to which the target object belongs based on a category to which the at least one reference object belongs and/or the at least one target category; obtain target object attribute information corresponding to the publishing category; and perform a publishing operation for the target object based on the publishing category and the target object attribute information;
the client, configured to display a preview page after the target object is published.

A tenth embodiment of the present disclosure provides an electronic device, the electronic device comprising a memory and a processor, where the memory is configured to store a computer program; and the processor is coupled to the memory and configured to execute the computer program stored in the memory to implement steps in the method provided by any of the above method embodiments.

An eleventh embodiment of the present disclosure provides a computer-readable storage medium, the computer-readable storage medium storing computer instructions, which, when run on an electronic device, cause the electronic device to perform the method steps described in any of the above method embodiments.

A twelfth embodiment of the present disclosure provides a chip, the chip comprising a processor, the processor being configured to invoke a computer program in a memory to perform the method steps described in any of the above method embodiments.

A thirteenth embodiment of the present disclosure provides a computer program product, comprising a computer program, which, when executed by a processor, implements the method steps described in any of the above method embodiments.

In the technical solution provided by the embodiments of the present disclosure, multi-modal information of a target object is obtained, and a publishing category to which the target object belongs is determined based on the multi-modal information. This category determination method utilizes the mutual complementarity and mutual cross-verification of multi-modal information, making the publishing category determination result more robust and accurate. Thereafter, target object attribute information can also be automatically mapped to attribute information under the publishing category, realizing automatic attaching of object information and reducing manual attaching operations. In summary, the present solution can determine a suitable publishing category for a target object to be published in real time and automatically attach the attribute information of the target object, improving the degree of automation of information publishing and greatly reducing the manual cost of information publishing, especially when a large batch of information needs to be published, the reduction in manual cost is more significant.

In addition, the technical solution provided by the embodiments of the present disclosure further provides a solution for product batch publishing. A user can import or input multi-modal information of a plurality of products to be batch-published at one time, and an execution subject can automatically determine corresponding publishing information for each product and perform a batch publishing operation, so that a merchant can batch-view preview pages of the plurality of products after publishing. The user does not need to input or import products one by one for individual publishing; by using the solution of the present embodiment, the product publishing efficiency is high.

### BRIEF DESCRIPTION OF THE DRAWINGS

To describe the technical solutions in the embodiments of the present disclosure or the prior art more clearly, the drawings required in the description of the embodiments or the prior art will be briefly introduced below. Obviously, the drawings in the following description are some embodiments of the present disclosure. For those of ordinary skill in the art, other drawings can also be obtained based on these drawings without creative labor.
FIG. 1 is a schematic structural diagram of an information publishing system provided by an embodiment of the present disclosure;
FIG. 2 is a schematic flowchart of an information publishing method provided by an embodiment of the present disclosure;
FIG. 3 is a schematic principle diagram of product information input provided by an embodiment of the present disclosure;
FIG. 4 is a schematic principle diagram of determination of a category to which a target object belongs provided by an embodiment of the present disclosure;
FIG. 5 is a schematic flowchart of an information category determination method provided by an embodiment of the present disclosure;
FIG. 6 and FIG. 7 are schematic flowcharts of an information publishing method provided by another two embodiments of the present disclosure;
FIG. 8 and FIG. 9 are schematic structural diagrams of an information publishing apparatus provided by embodiments of the present disclosure;
FIG. 10 is a schematic structural diagram of an electronic device provided by an embodiment of the present disclosure.

### DETAILED DESCRIPTION OF EMBODIMENTS

Currently, merchants in e-commerce often need to publish a large number of products to e-commerce platforms they have joined for sale. During the product publishing process, existing e-commerce platforms often require merchants to manually select the category to which the product belongs, which is time-consuming and prone to errors. These problems are more prominent during product batch publishing. Once the category to which the product belongs is incorrectly selected, it will not only affect the search and traffic pushing of the product and reduce the product sales volume, but also lead to situations where incorrect products are recommended to consumers.

Although some e-commerce platforms have achieved the purpose of automatically determining the category to which a product belongs to a certain extent based on pre-trained classification models, only textual information of the product is considered when constructing the classification model, while information of other modalities of the product, such as audio, images, videos, etc., is ignored. The textual information of products is often relatively short; for example, 63% of product titles have fewer than 10 words, which leads to low category prediction accuracy. In addition, classification models rely on a large amount of high-quality manual labeled data for end-to-end training in relevant fields, resulting in insufficient generalization performance of the obtained classification models, a lack of autonomous reasoning capability, and an inability to identify unseen categories. Once a new category is added to the category structure, it is necessary to manually label new sufficient labeled data to retrain the model.

To address the above problems, the present disclosure provides a technical solution for determining a category to which a target object belongs based on multi-modal information (such as textual information, image information, audio information, video information, etc.) of the target object. In the solution provided by the present disclosure, a target object may be a product. Adopting the solution of the embodiments of the present disclosure can improve the accuracy of product category prediction and provide further assistance for automatic product publishing, thereby helping to reduce product operation costs for merchants.

To enable those skilled in the art to better understand the solutions of the present disclosure, the technical solutions in the embodiments of the present disclosure will be clearly and completely described below in combination with the drawings in the embodiments of the present disclosure.

In some processes described in the specification, claims, and the above drawings of the present disclosure, a plurality of operations appearing in a specific order are included, and these operations may be performed not in the order in which they appear herein or may be performed in parallel. Serial numbers of operations such as 101, 102, etc., are only used to distinguish different operations, and the serial numbers themselves do not represent any execution order. In addition, these processes may include more or fewer operations, and these operations may be performed sequentially or in parallel. It should be noted that descriptions such as "first" and "second" herein are used to distinguish different messages, devices, modules, etc., and do not represent a sequential order, nor do they limit "first" and "second" to being different types. In the present disclosure, the term "or/and" is only an association relationship describing associated objects, indicating that three relationships may exist, for example: A or/and B indicates three cases: A exists alone, both A and B exist, and B exists alone; in the present disclosure, the character "/" generally indicates that the preceding and following associated objects are in an "or" relationship. It should also be noted that the terms "comprising," "including," or any other variation thereof are intended to cover non-exclusive inclusion, such that a product or system comprising a series of elements includes not only those elements but also other elements not explicitly listed, or further includes elements inherent to such a product or system. Without further limitations, an element defined by the phrase "comprising a..." does not exclude the presence of other identical elements in the product or system comprising the element. Furthermore, the following embodiments are only some, rather than all, of the embodiments of the present disclosure. Based on the embodiments in the present disclosure, all other embodiments obtained by those skilled in the art without creative labor shall fall within the protection scope of the present disclosure.

Before introducing the embodiments of the present disclosure, some terms appearing herein are briefly introduced.

A modality is a form of expression of a thing, and multi-modality usually includes two or more modality forms, describing a thing from multiple perspectives. For example, multi-modal information of a product may include, but is not limited to: product textual information, product images, product audio and video information, etc. Using multi-modal data can make the product presentation more three-dimensional and comprehensive.

BLIP-2: Bootstrapping Language-Image Pre-training with Frozen Image Encoders and Large Language Models, a multi-modal large model with an ultra-large parameter scale. BLIP-2 is a universal and effective pre-training strategy. The embodiments of the present disclosure utilize the image-text multi-modal alignment capability of BLIP-2 to infer vectorized representations of various modal information. For example, BLIP-2 can be used to infer a vectorized representation of product image information, and can also be used to infer a vectorized representation of product textual information, and so on.

BE: Basic Engine, a recall engine. BE vector recall is to perform vectorized representation of elements (entities) to construct an index for efficient retrieval. At the retrieval end, retrieval elements (entities) are also vectorized in the same way, and retrieval techniques are used for retrieval and recall to obtain a set of products or elements (entities) with close distances, which are then sorted according to the distances.

CPV data: an e-commerce platform characterizes a product using a category-property-attribute value (also CPV, Category Product Value) method.

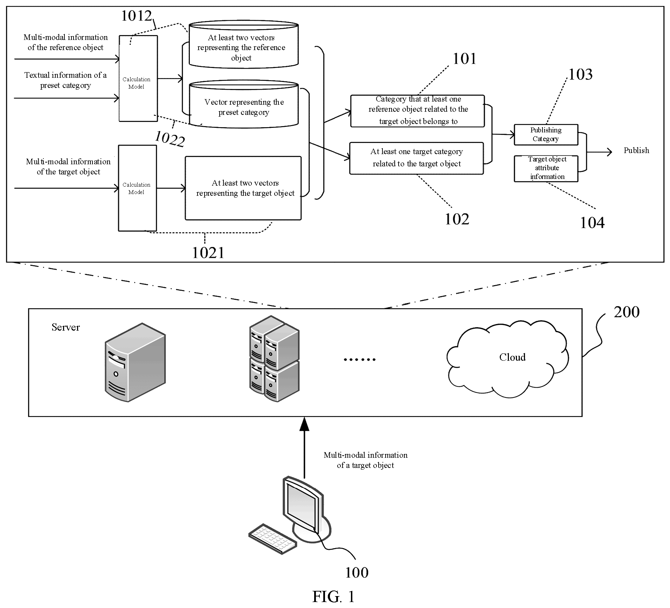

Each method embodiment provided by the present disclosure may be implemented on hardware corresponding to the following information publishing system. Specifically, as shown in FIG. 1, the information processing system includes: a client 100 and a server 200.

In a specific implementation, the client 100 is used to send multi-modal information of a target object to the server in response to an operation of a user on the target object. The server 200 is used to obtain at least one reference object and/or at least one target category having a correlation with the target object based on the multi-modal information; determine a publishing category to which the target object belongs based on a category to which the at least one reference object belongs and/or the at least one target category; and determine target object attribute information corresponding to the publishing category. The client 100 is used to display the publishing category and the target object attribute information corresponding to the publishing category for verification; and in response to a verification pass instruction, trigger the server to perform a publishing operation for the target object based on the publishing category and the target object attribute information corresponding to the publishing category.

In another implementable way, the client 100 is used to send multi-modal information of a target object to the server in response to an operation of a user on the target object. The server 200 is used to obtain at least one reference object and/or at least one target category having a correlation with the target object based on the multi-modal information of the target object; determine a publishing category to which the target object belongs based on a category to which the at least one reference object belongs and/or the at least one target category; obtain target object attribute information corresponding to the publishing category; and perform a publishing operation for the target object based on the publishing category and the target object attribute information. The client 100 is used to display a preview page after the target object is published.

The information publishing system may be an e-commerce system in the e-commerce field. Correspondingly, the target object may be a product to be published on an e-commerce platform. Specifically, it may be, but is not limited to: clothing, home furnishings, shoes and boots, bags (such as handbags, backpacks, luggage, etc.), hats, gloves, accessories (such as bangles, necklaces, bracelets, earrings, headwear, etc.), electronic products (such as watches, mobile phones, laptops, tablets, etc.), bedding, and so on.

The multi-modal information of the target object may be uploaded or input by the user through a client interface.

The client may be a smartphone, a tablet computer, a desktop computer, a smart wearable device, or the like. The server may be a single server, a server cluster, a virtual server deployed on a server, a cloud, or the like.

Specific contents of functions corresponding to various hardware such as the client and the server in the information processing system will be described in detail in the following method embodiments.

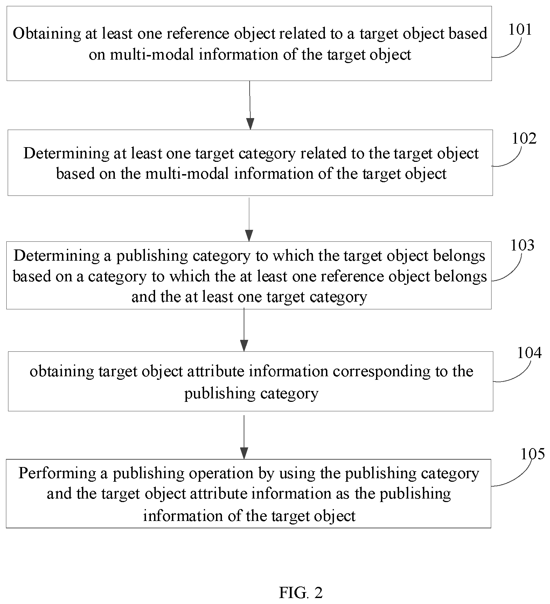

FIG. 2 illustrates a schematic flowchart of an information processing method provided by an embodiment of the present disclosure. An execution subject of all steps in the method of this embodiment may be the server in the system. Of course, if a hardware device corresponding to the client has strong computing power, the execution subject of the method of this embodiment may also be the client, or the client and the server perform execution cooperatively (that is, some steps are performed by the client, and other steps are performed by the server). As shown in FIG. 2, the information publishing method provided by the embodiment of the present disclosure includes the following steps:
101: obtaining at least one reference object related to a target object based on multi-modal information of the target object;
102: determining at least one target category related to the target object based on the multi-modal information of the target object;
103: determining a publishing category to which the target object belongs based on a category to which the at least one reference object belongs and the at least one target category;
104: obtaining target object attribute information corresponding to the publishing category;
105: performing a publishing operation by using the publishing category and the target object attribute information as the publishing information of the target object.

In this embodiment, the target object mentioned in each step may be a target product (also referred to as a product to be published) that a merchant needs to publish through an e-commerce platform. For the type of the target product, reference may be made to relevant content described in other embodiments above. Correspondingly, the multi-modal information of the target object is multi-modal information of the product (such as images, audio, video, text, etc.), which may be provided by the merchant or obtained from a network side (such as other platforms). For example, for the same e-commerce, there are an overseas platform for overseas markets and a domestic platform for domestic markets. If the merchant has published the product on the domestic platform and wants to publish the product on the overseas platform as well, the product may be obtained from the domestic platform by an execution subject of the embodiments of the present disclosure.

In addition to products, the target object may also be information-based information (such as news information, courseware information, etc.).

The multiple types of modal information include, but are not limited to: textual information, image information, video information, audio information, and the like. Here, the video information may be converted into image information in an image format, and the audio information may be converted into textual information in a text format. Therefore, information included in the product information may be roughly divided into the following two types of modal information: textual information (which may include textual information provided by the merchant and textual information obtained by converting audio information into text) and image information (which may include image information provided by the merchant and image information obtained by extracting video frames from video information).

Taking the target object being a product as an example, the textual information may include a product title, product attributes (such as material, color, size, etc.), a detailed product description (such as name, brand, specification, use, applicable population, freight, place of origin, etc.), an external website category path corresponding to the product, and so on. The image information may include: display images of the product (such as a main image with a white background, a scene image, a detail image, etc.), and SKU (Stock Keeping Unit, a unit for inventory inbound and outbound measurement) images (which are images for displaying product specification attributes). In a specific implementation, a merchant may input or upload product information through a product publishing page provided by an e-commerce platform. According to different input methods, the merchant may input data of different modalities in the product information for one or more products to be published at one time.

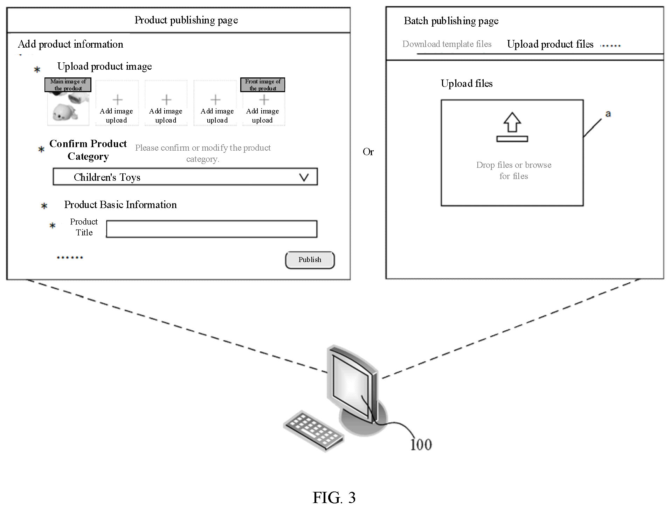

For example, as shown in FIG. 3, a merchant may successfully log in to a merchant back-end page provided by an e-commerce platform through a client 100, and enter a product publishing page shown in FIG. 3 by clicking a "publish product" functional control on the merchant back-end page. Then, for a target product to be published, the merchant inputs product information (such as image information and textual information) of the product through the product publishing page. After completion, the merchant may click a "publish" control, and the client 100 sends a product publishing request to a server in response to the clicking operation of the merchant. After receiving the product publishing request, the server may obtain multi-modal information of the product provided by the merchant from information carried in the product publishing request.

For another example, still referring to FIG. 3, assuming that the merchant has a demand for batch publishing products, a product Excel template for batch publishing products is provided on the e-commerce platform. After the merchant downloads the product Excel template on the e-commerce platform where the merchant is settled and fills product information of multiple products to be published prepared in advance into the product Excel template, the merchant may import the filled product Excel template into the e-commerce platform through an "upload file" control a in a batch publishing page provided by the e-commerce platform. In response to the importing operation triggered by the merchant, the server may obtain the product Excel template imported by the merchant and obtain respective product information (multi-modal information) of the multiple products therefrom. In this case, the target object targeted by the above steps of this embodiment may be one of the multiple products. Each of the multiple products may be published by using the method steps provided in the embodiments of the present disclosure.

In the above 101, each modal information included in the multi-modal information may be vectorized, so as to obtain at least one reference object by using a vector corresponding to each modal information.

Similarly, in the above 102, each modal information included in the multi-modal information may also be vectorized, so as to determine at least one target category by using the vector corresponding to each modal information.

The multi-modal information includes at least textual information and image information of the target object. By using a calculation model, vectorized representations are respectively inferred for the textual information and the image information of the target object, so as to obtain a vector corresponding to the textual information of the target object and a vector corresponding to the image information.

The calculation model may be, but is not limited to, a model obtained by performing offline training on BLIP-2 (Bootstrapping Language-Image Pre-training with Frozen Image Encoders and Large Language Models, a multi-modal large model with an ultra-large parameter scale) using high-confidence manual labeled data. More specifically, during implementation, it may be realized with the aid of RTP-PY (Real-Time Processing in Python) based on BLIP-2. RTP-PY is a real-time inference service platform based on the Python language. The manual labeled data is data of a labeled reference object (also referred to as an anchor object, such as an anchor product), and a category to which the reference object belongs has high accuracy. When performing offline training on BLIP-2, the training may specifically be implemented by using textual information and image information of the reference object.

Corresponding preprocessing may be performed on the textual information and the image information of the target object first, and then, a deployed calculation model is called to respectively perform online inference on the preprocessed textual information and image information of the target object to obtain corresponding vectorized representations. Specifically:

Preprocessing the textual information of the target object may include: if a language expression of the textual information is a non-default language, first, translating the textual information into a default language text. Then, performing normalization processing on the translated textual information, where the normalization processing includes but is not limited to: case conversion, accent processing, special punctuation processing, singular and plural processing, error correction processing, and the like. The preprocessed textual information will be used as an input of a vectorized representation processing model, so as to perform online inference on a text vector corresponding to the textual information through the vectorized representation processing model.

Preprocessing the image information of the target object may include: if the image information is represented by a corresponding link address URL (Universal Resource Locator), the link address URL corresponding to the image information may be converted into a corresponding transmission format such as BASE64 (BASE64 Encoding), so as to be transmitted and input to RTP-PY, such that RTP-PY obtains corresponding image information based on the received link address, thereby performing online inference on an image vector corresponding to the image information.

That is, further, step 101 "obtaining at least one reference object related to the target object based on multi-modal information of the target object" in this embodiment may be implemented by the following steps:
1011: performing vectorized representation on the multi-modal information of the target object to obtain at least two vectors representing the target object;
1012: obtaining object information of a plurality of preset reference objects, where the object information of the reference objects includes at least two vectors representing the reference objects;
1013: determining a correlation between the target object and the reference objects based on the at least two vectors representing the target object and the at least two vectors representing the reference objects;
1014: obtaining at least one reference object whose correlation meets a first requirement from the plurality of preset reference objects.

In 1011 above, the multi-modal information of the target object may include, but is not limited to: textual information and image information. Of course, the multi-modal information may further include: audio information, video information, and the like. Here, the audio information, the video information, and the like may all be processed into textual information and image information through a pre-processing process. Then, a vectorized representation corresponding to the textual information, i.e., a first text vector, is generated by using a calculation model; and a vectorized representation corresponding to the image information, i.e., a first image vector, is generated by using a calculation model. The calculation model may be a BLIP-2 model, or in a specific implementation, vectorized inference representation of multi-modal information is implemented by RTP-PY.

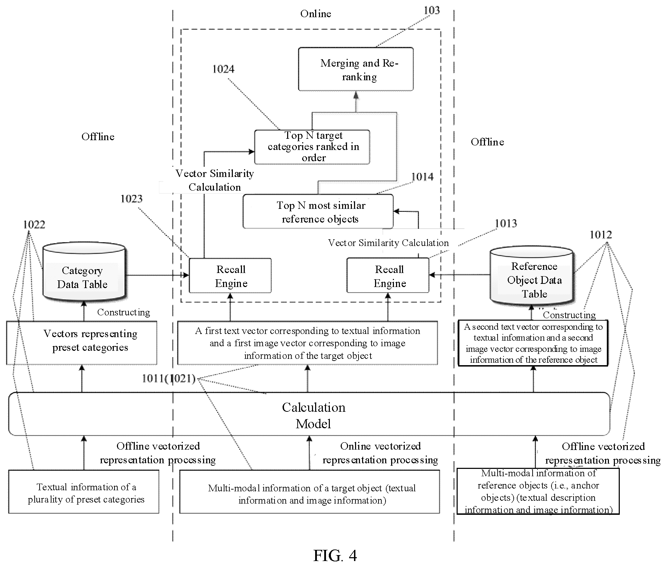

In the above 1012, for object information of a plurality of preset reference objects, corresponding vectorized representations may be offline inferred from textual information and image information of the reference objects in advance by using a calculation model, more specifically by using a zero-shot (zero-shot learning) capability of BLIP-2, so as to construct an index data table (such as a reference object data table shown in FIG. 4) for the reference objects based on the vectorized representation results. Table 1 below shows an example of the reference object data table.

**Table 1 Reference object data table**

| Reference object | Second text vector corresponding to textual information | Second image vector corresponding to image information |
|---|---|---|
| a1 | Embedding_Text21 | Embedding_Img21 |
| a2 | Embedding_Text22 | Embedding_Img22 |
| a3 | Embedding_Text23 | Embedding_Img23 |
| ....... | ....... | ....... |

After obtaining the reference object data table, a vector similarity calculation method, such as cosine similarity, Manhattan distance, or the like, may be used to calculate the similarity between a first text vector corresponding to the target object and each second text vector corresponding to each reference object in the reference object data table, and/or calculate the similarity between a first image vector of the target object and each second image vector corresponding to each reference object in the reference object data table, so as to determine the similarity between the target object and each reference object according to the calculated similarity results, thereby selecting at least one reference object most similar to the target object from a plurality of reference objects based on the similarity between the target object and each reference object. For example, the top N reference objects most similar to the target object are selected from the plurality of reference objects, where N may be a positive integer greater than 1. That is, the above 1013 may be performed by using a corresponding recall engine (for example, see FIG. 4) in specific implementation. The recall engine may be, but is not limited to, BE (Basic Engine, which is a recommendation recall engine implemented based on a DII (Data Integration and Inference) algorithm online service platform). Specifically, the recall engine may be used to perform vector similarity calculation on the first text vector and the first image vector corresponding to the target object and the second text vector and the second image vector corresponding to each reference object in an index data table (i.e., the reference object data table in FIG. 4) pre-constructed for the reference objects, so as to select a reference object similar to the target object based on the vector similarity calculation result.

That is, the above 1013 "determining the correlation between the target object and the reference object based on at least two vectors representing the target object and at least two vectors representing the reference objects" may include the following steps:
S11, determining a first similarity between the target object and a reference object according to the first text vector and the second text vector;
S12, determining a second similarity between the target object and the reference object according to the first image vector and the second image vector;
S13, determining the correlation between the target object and the reference object according to the first similarity and the second similarity.

Assuming that the first text vector corresponding to the target object is Aw and the second text vector corresponding to the i-th reference object is Bwi, the similarity between Aw and Bwi may use the cosine similarity formula shown as follows: $cos {θ}_{wwi} = \frac{{A}_{w} ∗ {B}_{wi}}{\left|{A}_{w}\right| ∗ \left|{B}_{wi}\right|}$

The first image vector corresponding to the target object is At and the second image vector corresponding to the i-th reference object is Bti, then the similarity between At and Bti may use the cosine similarity formula shown as follows: $cos {θ}_{tti} = \frac{{A}_{t} ∗ {B}_{ti}}{\left|{A}_{t}\right| ∗ \left|{B}_{ti}\right|}$

The first similarity between the first text vector and the second text vector corresponding to the i-th reference object is denoted as cosθwwi, and the second similarity between the first image vector and the second image vector corresponding to the i-th reference object is denoted as cosθtti.

Correspondingly, the above S13 "determining the correlation between the target object and the reference object according to the first similarity and the second similarity" may specifically be:
Calculating a weighted similarity of the first similarity and the second similarity through weighted calculation, and taking the weighted similarity result as the correlation between the target object and the reference object.

That is, correlation = Mcosθwwi+Ncosθtti, where M and N are weighting values, and specific values are not limited in this embodiment and may be manually set according to actual situations or calculated based on a preset algorithm.

Further, the method provided in this embodiment may further include the following steps:
S14: determining a third similarity between the target object and the reference object according to the first text vector and a second image vector;
S15: determining a fourth similarity between the target object and the reference object according to the first image vector and a second text vector;

Correspondingly, when the correlation between the target object and the reference object is determined in S13 above, it is determined according to the first similarity, the second similarity, the third similarity, and the fourth similarity.

Assuming that the first text vector corresponding to the target object is Aw and the second image vector corresponding to the i-th reference object is Bti, then the similarity between Aw and Bti may use a cosine similarity formula shown as follows: $cos {θ}_{wti} = \frac{{A}_{w} ∗ {B}_{ti}}{\left|{A}_{w}\right| ∗ \left|{B}_{ti}\right|}$

The first image vector corresponding to the target object is At and the second text vector corresponding to the i-th reference object is Bwi, then the similarity between At and Bwi may use a cosine similarity formula shown as follows: $cos {θ}_{twi} = \frac{{A}_{t} ∗ {B}_{wi}}{\left|{A}_{t}\right| ∗ \left|{B}_{wi}\right|}$

Correspondingly, the correlation between the target object and the reference object = Mcosθwwi+Ncosθtti+Ccosθwti+Dcosθtwi, where M, N, C, and D are weighting values, and specific values are not limited in this embodiment and may be manually set according to actual situations or calculated based on a preset algorithm.

According to the above steps, the correlation between the target object and each reference object can be calculated. Then, based on the correlation between the target object and each reference object, the reference objects can be sorted according to the values of the correlation from large to small, so as to select the top N reference objects in the sorting, and these top N reference objects are the reference objects related to the target object. Alternatively, a reference object whose correlation value is greater than a preset similarity threshold may also be selected and determined as a reference object related to the target object. The above N can be flexibly set according to actual situations, which is not specifically limited in this embodiment. That is, the "first requirement" in step 1014 above may be, but is not limited to: "top N reference objects in the sorting", or "the correlation value is greater than a preset similarity threshold", and so on.

After at least one reference object related to the target object is obtained, since the reference object is an object manually labeled with high confidence, which can ensure the accuracy of the category to which the labeled reference object belongs, when the category to which the target object belongs is determined, reference may be made to the category to which the obtained at least one reference object related to the target object belongs.

The category to which the reference object belongs may be a leaf category, and the leaf category is a category in a preset category structure (category tree) that is at the last level and cannot be further subdivided downward. Taking an e-commerce platform scenario as an example, in the e-commerce platform scenario, categories are generally divided into four levels, which are level one, level two, level three, and leaf category (level four). For example, level one is agricultural and sideline food, level two is aquatic products, level three is fish, and the leaf category is freshwater fish.

In an achievable instance, step 102 "determining at least one target category related to the target object based on multi-modal information of the target object" in the present embodiment may include the following steps:
1021: performing vectorized representation on the multi-modal information of the target object to obtain at least two vectors representing the target object;
1022: obtaining category information of a plurality of preset categories, where the category information includes a vector representing the preset category;
1023: determining a correlation between the target object and the preset category based on the at least two vectors representing the target object and the vector representing the preset category;
1024: obtaining, from the plurality of preset categories, at least one target category whose correlation meets a second requirement.

In the above 1021, the multi-modal information of the target object may include, but is not limited to: textual information and image information. Of course, the multi-modal information may further include: audio information, video information, and the like. Here, the audio information, the video information, and the like can all be processed into textual information and image information through a pre-processing process. Then, a vectorized representation corresponding to the textual information, i.e., a first text vector, is generated by using a calculation model; a vectorized representation corresponding to the image information, i.e., a first image vector, is generated by using the calculation model. The calculation model may be a BLIP-2 model, or in specific implementation, vectorized inference representation of multi-modal information is implemented by RTP-PY.

That is, 1021 may specifically be: inputting the multi-modal information of the target object into the calculation model, and executing the calculation model to output at least two vectors representing the target object.

In specific implementation of the above 1022, category information of a plurality of preset categories may be obtained in advance by using a calculation model. That is, textual information of each preset category is input into the calculation model, and the calculation model is executed to output a vector representing each preset category. More specifically, by using the zero-shot capability of BLIP-2, offline inference is performed on textual information of each category in a preset category structure to obtain a corresponding vectorized representation, so as to construct an index data table (such as the category data table in FIG. 4) for each category in the category structure based on the vectorized representation result. Here, in the process of performing offline inference on the textual information of the category to obtain the corresponding vectorized representation, expansion processing may also be performed on the textual information to enrich textual description content of the category; for example, the textual information may be expanded based on a natural language processing model driven by artificial intelligence technology, and typical category words under the category are simultaneously supplemented into the textual information. The natural language processing model may be, for example, ChatGPT (Chat Generative Pre-trained Transformer).

That is, the embodiment of the present disclosure may further include the following steps:
106: obtaining textual information of a preset category;
107: generating an inquiry question based on the textual information;
108: triggering a natural language processing model by using the inquiry question to expand the textual information of the preset category;
109: performing vectorized representation on the expanded textual information of the preset category to obtain a vector representing the preset category.

Table 2 below shows an example of a category data table.

**Table 2 Category data table**

| In the category structure Each preset category | A third text vector corresponding to the textual information of the preset category |
|---|---|
| c1 | Embedding_Text31 |
| c2 | Embedding_Text32 |
| c3 | Embedding_Text33 |
| ....... | ....... |

If the category structure changes, the present embodiment only needs to use a calculation model to perform inference on a new category to perform vectorized representation and storage, and no other modifications are required.

After the category data table is obtained, a vector similarity calculation method, such as cosine similarity, Manhattan distance, or the like, may be used to calculate the similarity between a first text vector corresponding to the target object and a vector representing a preset category (such as a third text vector). For the specific implementation of similarity calculation, reference may be made to the relevant content described above for the reference object, and details are not repeated here. Then, sorting is performed according to the similarity from large to small, and the top N preset categories in the sorting are selected as at least one target category related to the target object. Alternatively, a preset category with a similarity value greater than a set threshold is selected as the target category related to the target object.

In addition to calculating the similarity between the first text vector of the target object and the vector representing the preset category, the similarity between a first image vector of the target object and the vector representing the preset category may also be calculated. That is, the above step 1023 "determining the correlation between the target object and the preset category based on at least two vectors representing the target object and the vector representing the preset category" may include:
S21, determining a first similarity between the target object and the category according to the first text vector and the vector representing the preset category;
S22, determining a second similarity between the target object and the category according to the first image vector and the vector representing the preset category;
S23, determining the correlation between the target object and the preset category based on the first similarity and/or the second similarity.

That is, in a first manner, the first similarity is directly used as the correlation between the target object and the preset category. In a second manner, the second similarity is directly used as the correlation between the target object and the preset category. In a third manner, a weighted average value of the first similarity and the second similarity is calculated, and the weighted average value is used as the correlation between the target object and the preset category.

Assuming that the first text vector corresponding to the target object is Aw, and the third text vector corresponding to the j-th preset category is Cwj, then the similarity between Aw and Cwj may use the cosine similarity formula shown as follows: $cos {θ}_{wwj} = \frac{{A}_{w} ∗ {C}_{wj}}{\left|{A}_{w}\right| ∗ \left|{C}_{wj}\right|}$

The first image vector corresponding to the target object is At, and the third text vector corresponding to the j-th preset category is Cwj, then the similarity between At and Cwj may use the cosine similarity formula shown as follows: $cos {θ}_{twj} = \frac{{A}_{t} ∗ {C}_{wj}}{\left|{A}_{t}\right| ∗ \left|{C}_{wj}\right|}$

If the third manner is used, then the correlation between the target object and the j-th preset category = aMcosθwwj+bcosθtwj, where a and b are weighted values respectively, and specific values are not limited in the present embodiment, and may be manually set according to actual conditions or calculated based on a preset algorithm.

The above process may be completed by using a corresponding recall engine (such as the example shown in FIG. 4). The recall engine may be, but is not limited to, BE (Basic Engine) (which is a recommendation recall engine implemented based on a DII algorithm online service platform).

Further, step 103 "determining the publishing category to which the target object belongs according to the category to which at least one reference object belongs and at least one target category" in the present embodiment may be implemented by using the following steps:
1031, merging the category to which at least one reference object belongs and at least one target category to obtain a candidate category table without duplicate categories;
1032, sorting categories in the candidate category table;
1033, taking a category whose arrangement order is at a set position as a publishing category to which the target object belongs.

For convenience of description, a category to which at least one reference object belongs is referred to as a first candidate category set, and at least one target category is referred to as a second candidate category set. In specific implementation, during category deduplication and merge processing, deduplication is performed for the same category.

For example, if the first candidate category set includes {category a (correlation value a), category b (correlation value b), category c (correlation value c), and category d (correlation value d)}; and the second candidate category set includes {category a (correlation value a'), category c (correlation value c'), category e (correlation value e'), and category f (correlation value f)}, then a deduplication operation needs to be performed during merge processing to obtain a candidate category list without duplicate categories:
{category a (correlation value a, correlation value a'), category b (correlation value b), category c (correlation value c, correlation value c'), category d (correlation value d), category e (correlation value e'), and category f (correlation value f)}

Here, the correlation values following the various categories are calculated through the methods described above, and for specific content, reference may be made to the above content, which will not be repeated here. Some categories have only one correlation value, while some have two correlation values. For a category with two correlation values, one correlation value is calculated through S11 to S12 or S11 to S14 above, and the other correlation value is calculated through S21 to S23 above.

After the candidate category list without duplicate categories is obtained, the various categories can be sorted based on the correlation values corresponding to the various categories in the candidate category list. A category having two correlation values indicates that the category exists in both candidate category sets, and such a category has a greater correlation with the target object. Therefore, during sorting, some similarity scoring algorithms may be used to sort the various categories in the candidate category list. The simplest way is to simply add up the correlation values of the various categories to obtain a final correlation value for sorting. More complexly, a similarity scoring algorithm may be designed to add an additional score to a category having two correlation values to improve its sorting order, and so on, which is not limited in this embodiment.

The above 1033 may specifically be: taking a category ranked first as the publishing category of the target object.

Generally, publishing is completed only after attribute information of the target object is attached to a corresponding leaf category. Corresponding category attribute information is set under each leaf category. The category attribute information can be obtained through an attribute template attached to the leaf category, and the target object attribute information is mapped one-to-one to attribute values of corresponding attributes under the target category, thereby achieving the purpose of attaching the target object attribute information to the target category. Thus, in an implementable solution, the above 104 "obtaining target object attribute information corresponding to the publishing category" may specifically include:
1041, obtaining an attribute template under the publishing category;
1042, filling the target object attribute information into an adapted position in the attribute template.

It should be added here that after the target object attributes are mapped to the attribute information under the publishing category, verification may also be performed on attribute values of various attributes under the publishing category, such as data standardization verification of a range of objects that can be operated by a publisher (merchant), and the like, and the target object publishing is completed if the verification is passed.

In the technical solution provided in this embodiment, multi-modal information of a target object is obtained, and a publishing category to which the target object belongs is determined based on the multi-modal information. This category determination method utilizes mutual complementarity and mutual cross-verification of the multi-modal information, making the publishing category determination result have better robustness and higher accuracy. Afterwards, target object attribute information can also be automatically mapped to attribute information under the publishing category, realizing automatic attaching of object information and reducing manual attaching operations. In summary, this solution can determine the most suitable publishing category for a target object that needs to be published in real time, and automatically attach the attribute information of the target object, improving the degree of automation of information publishing, and can greatly reduce the manual cost of information publishing, especially when information needs to be published in large batches, the manual cost reduction effect is more significant.

Further, the method provided in this embodiment may further include the following steps:
110, when it is monitored that a new category is added to a preset category structure, obtaining textual information of the new category;
111, performing expansion processing on the textual information of the new category to obtain expanded textual information;
113, performing vectorized representation on a text vector corresponding to the expanded textual information to obtain a vector corresponding to the new category;
114, adding the new category and the vector corresponding to the new category to a category data table.

Through the above steps 110 to 114, when the category structure changes, such as when a new category is added, it is only necessary to use a calculation model to infer a corresponding vectorized representation for the new category and store it, without making any other modifications, for example, without re-labeling data for the new category to re-train a corresponding model.

In summary, the technical solution provided in the present disclosure builds a complete real-time information publishing system by utilizing the image-text multi-modal alignment capability of BLIP2. Taking a product publishing scenario of an e-commerce platform as an example, a real-time product publishing system is built by using the technical means of the present disclosure, providing technical capabilities for accurate and rapid publishing of products, thereby helping the e-commerce platform rapidly expand product supply.

Specific process steps of the entire process of the system are as follows:
Step 1: Before implementing online intelligent product publishing, preparation of offline data needs to be completed. This stage includes:
1. Manually labeling product data with high confidence to ensure that the publishing category of the labeled product is accurate.
2. By using the BLIP2 zero-shot capability, textual descriptions and product images of high-confidence products (anchor products labeled manually) are inferred offline and represented in a vectorized manner, and a corresponding anchor product index data table (same as the reference object data table in FIG. 4) is established.
3. By using the BLIP2 zero-shot capability, textual descriptions of categories (expanded based on ChatGPT, while supplementing typical category words under the categories) are inferred offline and represented in a vectorized manner, and a corresponding category index data table (same as the category data table in FIG. 4) is established.

It should be added here that: index back-to-table means that when a query statement is executed, the mysql database needs to first search an index table, and then search for corresponding data in a main table according to a pointer on the index table.

Step 2: for the multi-modal information of the product to be published, performing corresponding preprocessing according to information of different modalities, including:
1. For textual product information (such as product title, attribute, detailed description, external website category path, etc.), if translation into a default language is required, translation needs to be performed first; if translation is not required, this step can be skipped. Performing normalization processing on the translated text (such as uppercase to lowercase, accent processing, special punctuation mark processing, singular and plural processing, error correction processing, etc.).
2. For image type product information (such as product display images, SKU (Stock Keeping Unit) images, etc.), converting from an image storage URL to a BASE64 format. Preprocessing results of different modalities serve as input for online inference of product vectors in the next step.

Step 3: calling a deployed BLIP2 multi-modal large-scale online service to respectively infer vectorized representations for the textual description and the image of the product, and then performing a stage of recall ranking-re-ranking:
Recall ranking: based on the multi-modal (text/image) large model vectorized representation of the product, among a plurality of anchor products, recalling the most similar TopN anchor products for the target product according to cosine similarity (the specific process can refer to the content above) to obtain the TopN anchor products. Based on the multi-modal (text/image) large model vectorized representation of the product, and the text large model vectorized representation of the leaf category, obtaining the most similar TopN leaf categories according to cosine similarity.

Re-ranking: dynamically merging the categories to which the TopN anchor products belong and the TopN leaf categories through similarity scoring to generate a ranking of predicted categories after re-ranking, and finally obtaining the Top1 category as the publishing category of the product.

Step 4: based on the publishing category of the product, mapping CPV data in the product attribute information input one by one to attributes and attribute values under the category.

Step 5: finally performing verification on fields of the product to be published (such as data standardization verification, business scope verification of the merchant publishing the product, etc.), and completing product publishing once the verification is completed.

The system of the present solution is based on the large model BLIP2 with an ultra-large number of parameters, and thus has excellent generalization performance. Compared with end-to-end modeling solutions, there are two obvious advantages:
1. Multi-modal information of text and images of the product is fully utilized, which complements each other and performs cross-verification, making prediction results more accurate and robust.
2. When a category structure changes, it is only necessary to perform inference and storage for the new category again through large-scale line management, without other modifications. In contrast, a traditional end-to-end model requires re-labeling data and re-training the model.

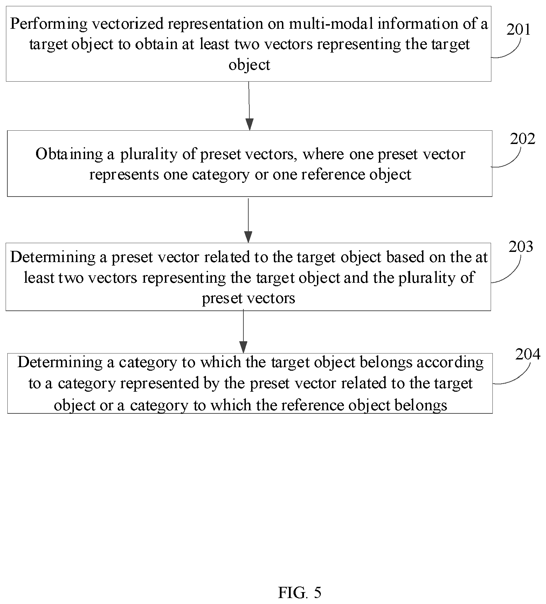

Another embodiment of the present disclosure provides an information category determination method. FIG. 5 illustrates a schematic flowchart of an information category determination method provided by an embodiment of the present disclosure, where an execution subject of all steps in the method may be the server in the above system embodiment. Referring to FIG. 5, the information processing method provided in this embodiment includes the following steps:
201: performing vectorized representation on multi-modal information of a target object to obtain at least two vectors representing the target object;
202: obtaining a plurality of preset vectors, where one preset vector represents one category or one reference object;
203: determining a preset vector related to the target object based on the at least two vectors representing the target object and the plurality of preset vectors;
204: determining a category to which the target object belongs according to a category represented by the preset vector related to the target object or a category to which the reference object belongs.

The preset vectors in 202 above include: at least two vectors representing the reference object obtained by performing vectorized representation on multi-modal information of the reference object; and/or a vector representing a preset category obtained by performing vectorized representation on a textual description of the preset category.

In the above 201 and 202, the vectorized representation process may refer to the solution implementation in the above embodiments, such as using a BLIP2 model or the like.

For the specific implementation of the above 203 and 204, reference may also be made to the corresponding content above, and details are not repeated here.

Further, the method provided in this embodiment may further include the following steps:
205: obtaining target object attribute information corresponding to a category to which the target object belongs;
206: using the category to which the target object belongs and the target object attribute information as publishing information of the target object, and performing a publishing operation.

Similarly, for the specific implementation of the above steps 205 and 206, reference may be made to the corresponding content above, and details are not repeated here.

It should be noted here that the embodiment of the information category determination method provided in this embodiment may include other steps mentioned above in addition to the above steps.

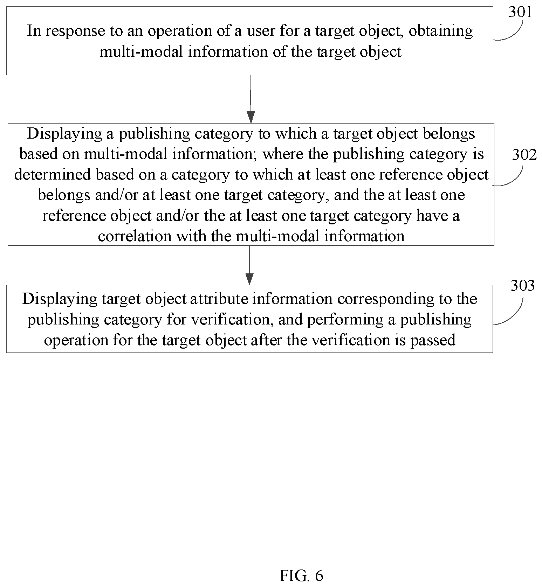

Further, the present disclosure also provides an embodiment of an information publishing method. As shown in FIG. 6, an execution subject of the method provided in this embodiment may be the client in the system embodiment above. Specifically, the method includes:
301: in response to an operation of a user for a target object, obtaining multi-modal information of the target object;
302: displaying a publishing category to which a target object belongs based on multi-modal information; where the publishing category is determined based on a category to which at least one reference object belongs and/or at least one target category, and the at least one reference object and/or the at least one target category have a correlation with the multi-modal information;
303: displaying target object attribute information corresponding to the publishing category for verification, and performing a publishing operation for the target object after the verification is passed.

In a possible technical solution, the step 302 "displaying a publishing category to which a target object belongs based on multi-modal information" may include:
3021: obtaining object information of a plurality of preset reference objects and category information of a plurality of preset categories;
3022: obtaining at least one reference object related to the target object from the plurality of reference objects according to the multi-modal information and the object information of the plurality of reference objects;
3023: obtaining at least one target category related to the target object from the plurality of preset categories according to the multi-modal information;
3024: determining the publishing category to which the target object belongs based on the category to which the at least one reference object belongs and the at least one target category.

In a second possible technical solution, the publishing category to which the target object belongs is determined based on the category to which the at least one reference object belongs. For example, the step 302 "displaying a publishing category to which a target object belongs based on multi-modal information" may include:
3021': obtaining object information of a plurality of preset reference objects;
3022': obtaining at least one reference object related to the target object from the plurality of reference objects according to the multi-modal information and the object information of the plurality of reference objects;
3023': determining the publishing category to which the target object belongs based on the category to which the at least one reference object belongs.

For example, a category to which a reference object most related to the target object belongs is determined as the publishing category to which the target object belongs.

In a third possible technical solution, the publishing category to which the target object belongs is determined based on the at least one target category. For example, the step 302 "displaying a publishing category to which a target object belongs based on multi-modal information" may include:
3021": obtaining category information of a plurality of preset categories;
3022": obtaining at least one target category related to the target object from the plurality of preset categories according to the multi-modal information;
3023": determining the publishing category to which the target object belongs based on the at least one target category.

For example, a target category most related to the target object is determined as the publishing category to which the target object belongs.

In the above 302, considering that when a publisher (such as a merchant) inputs information of a target object, the input information may also include a publishing category to which the target object belongs. In order to protect the rights and interests of the publisher, when the client or the server determines that the publishing category of the target object is inconsistent with the input publishing category, the publishing category automatically determined by the client or the server for the target object may be displayed on a client interface corresponding to the publisher, so that the publisher can participate in confirmation and selection. The publisher may trigger a corresponding confirmation and selection operation for the publishing category by using voice, a keyboard, a mouse, or the like; for example, the publisher may insist on selecting the input category, or may select the publishing category automatically confirmed by the system for the target object. For a specific implementation description of mapping the target object attribute information to attribute information under the publishing category, reference may be made to relevant content in other embodiments above.

Taking information as a product as an example, another embodiment of the present disclosure provides a product publishing method. Specifically, the product publishing method includes:
401: in response to an operation of a merchant on a product, obtaining multi-modal information of the product;
402: displaying a publishing category to which the product belongs based on the multi-modal information; where the publishing category is determined based on at least one category to which a reference product belongs and/or at least one target category, and the at least one reference product and/or the at least one target category have a correlation with the multi-modal information;
403: displaying product attribute information corresponding to the publishing category for verification, and after the verification is passed, performing a publishing operation on the product to publish the product to an e-commerce platform.

It should be noted here that this embodiment includes other steps mentioned above in addition to the above steps, and for specific content, reference may be made to the above content, which is not repeated here. In addition, for specific implementation content of the above steps, reference may also be made to the content above.

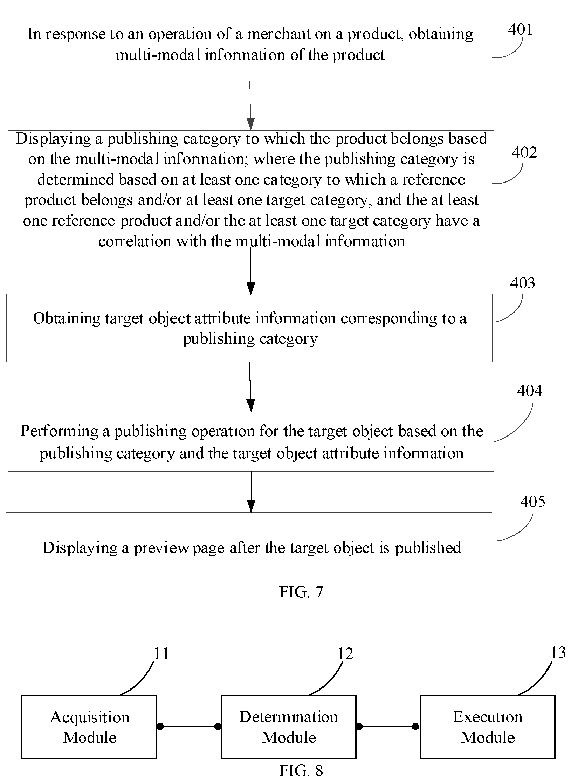

In the embodiment of the information publishing method shown in FIG. 6, a user (information publisher) first enters a product publishing page as shown in FIG. 3, and then inputs product information (i.e., multi-modal information of a target object) through the product publishing page. A publishing category automatically determined by the system for the target object may be displayed in the product publishing page, which can be seen and verified by the user. After the verification is passed, "publish" is clicked. There is also a case of batch publishing. In this case, the user may only need to upload an object file for batch publishing, and the system directly and automatically publishes all target objects in the file together. The user is unaware of the entire publishing process, that is, there is no product publishing page similar to the left side of FIG. 3 for the user to verify. For such a scenario, the present disclosure provides an embodiment of an information publishing method, as shown in FIG. 7, the method comprising:
401: in response to an operation of a user for a target object, obtaining multi-modal information of the target object;
402: determining a publishing category to which the target object belongs based on the multi-modal information; where the publishing category is determined based on a category to which at least one reference object belongs and/or at least one target category, and the at least one reference object and/or the at least one target category have a correlation with the multi-modal information;
403: obtaining target object attribute information corresponding to a publishing category;
404: performing a publishing operation for the target object based on the publishing category and the target object attribute information;
405: displaying a preview page after the target object is published.

For the specific implementation of the above 401 to 404, reference may be made to the corresponding content above, and details are not repeated here. Similarly, this embodiment includes other steps mentioned above in addition to the above steps, and for specific content, reference may be made to the above content.

In this embodiment, because the publishing process is imperceptible to a user, the user can perform review through a preview page after the final target object is published, so as to check for omissions, correct errors, and the like.

Similarly, taking information as a product as an example, the present disclosure further provides multiple embodiments of a product publishing method. Specifically:
A product publishing method provided by an embodiment of the present disclosure includes:
501: in response to an operation of a merchant on a product, obtaining multi-modal information of the product;
502: determining, based on multi-modal information, a publishing category to which a product belongs; where the publishing category is determined based on a category to which at least one reference product belongs and/or at least one target category, and the at least one reference product and/or the at least one target category have a correlation with the multi-modal information;
503: obtaining product attribute information corresponding to the publishing category;
504: performing a publishing operation for the product according to the publishing category and the product attribute information;
505: displaying a preview page after the product is published.

It should be noted here that this embodiment includes other steps mentioned above in addition to the above steps, and for specific content, reference may be made to the above content, which is not repeated here. In addition, for specific implementation content of the above steps, reference may also be made to the content above.

A product batch publishing method provided by another embodiment of the present disclosure comprises:
601: in response to a merchant triggering an operation for product batch publishing, obtaining multi-modal information of a plurality of products to be batch published;
602: determining corresponding publishing information for each of the plurality of products;
603: performing a batch publishing operation so that the merchant can batch review preview pages after the plurality of products are published.

Here, determining the corresponding publishing information for one of the plurality of products in the above 602 may comprise:
determining a publishing category to which the product belongs based on the multi-modal information of the product; where the publishing category is determined based on a category to which at least one reference object belongs and/or at least one target category, and the at least one reference object and/or the at least one target category have a correlation with the multi-modal information of the product;
attaching corresponding product attribute information to the publishing category to which the product belongs based on the multi-modal information of the product, to obtain the publishing information of the product.

It should be noted here that an execution subject of this embodiment may be the client or the server in the above system embodiment. Alternatively, the execution subject of the above 601 is the client, and the execution subjects of 602 and 603 are the server. In addition, besides the above steps, this embodiment further comprises other steps mentioned above, and for specific content, reference may be made to the above content, which is not repeated here. The specific implementation content of each of the above steps may also refer to the above content.

Further, the above step 601 "in response to a merchant triggering an operation for product batch publishing, obtaining multi-modal information of a plurality of products to be batch published" may comprise:
displaying a batch publishing page;
in response to an input operation of the merchant on a batch publishing page, obtaining a batch publishing file input by the merchant;
reading the multi-modal information of the plurality of products from the batch publishing file.

In the above, the batch publishing page may be a page similar to the page shown on the right side of FIG. 3. A merchant may click an "upload file" control a in the batch publishing page to import or input a batch publishing file, so that the client reads multi-modal information of multiple products from the batch publishing file and then sends the multi-modal information to the server. Alternatively, the client directly sends the batch publishing file to the server may determine corresponding publishing information for each of the multiple products based on the multi-modal information of the multiple products, and perform a batch publishing operation; then, the server feeds back preview pages after the multiple products are published to the client.

For example, the client interface displays a preview page after one of the products is published, and the client interface may be controlled to display a preview page after a next product is published through a touch operation (such as a sliding operation) or a control (such as a next control) operation. To facilitate modification or feedback by the merchant, an editing and/or feedback control is further displayed on the preview page. For example, when the merchant clicks the editing control, the preview page displayed on the current interface is in an editable state, and the merchant may perform modification. Alternatively, when the merchant clicks the feedback control, a feedback pop-up window is displayed on the current interface, and the merchant may fill in a modification suggestion in the feedback pop-up window. The modification suggestion may be fed back to a manual platform for adjustment by the manual platform. Alternatively, the modification suggestion is fed back to the server, and the server modifies the preview page based on the feedback suggestion. Further, a confirmation control may also be displayed on the preview page, and the merchant clicks the confirmation control for confirmation. In response to the merchant triggering confirmation for a preview page, the client sends a publishing instruction to the server to instruct publishing to the e-commerce platform.

It should be added here that the preview page after the product is published mentioned herein is not the page finally published to the e-commerce platform. After the merchant confirms, the server will send the preview page after the product is published as a publishing page to a corresponding server of the e-commerce platform.

In one case, the merchant will mark product category information for the product by itself. The merchant is relatively clear about the product category of the product. However, corresponding to the publishing category on the e-commerce platform, the product category marked by the user itself may be different from the publishing category to which the product belongs on the e-commerce platform, possibly due to differences in category structure or differences in category definition.

Since the product category of the product determined by the user is relatively accurate, during batch processing, products with the same product category information among the plurality of products to be batch published may be classified into one group. When determining the publishing category to which the product belongs, it is only necessary to use the technical means provided in the above embodiments to determine the publishing category to which one of the products belongs, and other products in the same group also belong to the publishing category; in this way, the number of publishing categories of products determined by the server is greatly reduced, the amount of calculation is reduced, and the batch publishing response speed can be improved.

That is, if the plurality of products comprise products of different categories; and the multi-modal information of the products contains product category information. Correspondingly, the product batch publishing method provided by this embodiment may further comprise the following steps:
grouping products with identical product category information into one group;
when determining the publishing category to which a product belongs based on the multi-modal information of the product, a publishing category to which one product in a group belongs is determined, and other products in the same group belong to the same publishing category.

For example, if product category information of product 1, product 4, and product 5 is the same, it is only necessary to determine the publishing category to which product 1 belongs based on the multi-modal information of product 1. If it is determined that the publishing category to which product 1 belongs is A, the publishing categories of product 4 and product 5 are also A.

From the perspective of a user (or a merchant), as long as the user inputs or imports multi-modal information of a plurality of products to be published in batches and clicks a "batch publish" control, the client and/or the server automatically performs a publishing operation of the products; the effect of "one-click batch product publishing" is intuitively perceived, the operation is simple, and the efficiency is high.

In the technical solution provided by the present embodiment, the user can import or input multi-modal information of a plurality of products to be batch published at one time, and the execution subject can automatically determine corresponding publishing information for each product and perform a batch publishing operation, so that the merchant can batch view preview pages of the plurality of products after publishing. The user does not need to input or import products one by one for individual publishing; by using the solution of the present embodiment, the product publishing efficiency is high.

FIG. 8 illustrates a schematic structural diagram of an information publishing apparatus provided by an embodiment of the present disclosure. As shown in FIG. 8, the information publishing apparatus includes: an acquisition module 11, a determination module 12, and an execution module 13. The acquisition module 11 is configured to acquire at least one reference object related to a target object based on multi-modal information of the target object. The determination module 12 is configured to determine at least one target category related to the target object based on the multi-modal information of the target object; and is further configured to determine a publishing category to which the target object belongs according to a category to which the at least one reference object belongs and the at least one target category. The acquisition module is further configured to acquire target object attribute information corresponding to the publishing category. The execution module 13 is configured to perform a publishing operation by using the publishing category and the target object attribute information as publishing information of the target object.

Further, the acquisition module 11 is specifically configured to, when acquiring the at least one reference object related to the target object based on the multi-modal information of the target object:
perform vectorized representation on the multi-modal information of the target object to obtain at least two vectors representing the target object;
obtain object information of a plurality of preset reference objects, wherein the object information of a reference object comprises at least two vectors representing the reference object;
determine a correlation between the target object and the reference object based on the at least two vectors representing the target object and at least two vectors representing the reference object;
obtain, from the plurality of preset reference objects, at least one reference object whose correlation meets a first requirement.

Further, the multi-modal information of the target object includes first textual information and first image information of the target object; the at least two vectors representing the target object include: a first text vector obtained by performing vectorized representation on the first textual information and a first image vector obtained by performing vectorized representation on the first image information;
multi-modal information of the reference object includes second textual information and second image information of the reference object, and the at least two vectors representing the reference object include: a second text vector obtained by performing vectorized representation on the second textual information and a second image vector obtained by performing vectorized representation on the second image information.

Correspondingly, the determination module 12 is specifically configured to, when determining the correlation between the target object and the reference object based on the at least two vectors representing the target object and the at least two vectors representing the reference object:
determine a first similarity between the target object and the reference object according to the first text vector and the second text vector; determine a second similarity between the target object and the reference object according to the first image vector and the second image vector; and determine the correlation between the target object and the reference object according to the first similarity and the second similarity.

Further, the determination module 12 is further configured to determine a third similarity between the target object and the reference object according to the first text vector and the second image vector; determine a fourth similarity between the target object and the reference object according to the first image vector and the second text vector; and when determining the correlation between the target object and the reference object, determine the correlation according to the first similarity, the second similarity, the third similarity, and the fourth similarity.

Further, the determination module 12 is specifically configured to, when determining the at least one target category related to the target object based on the multi-modal information of the target object:
perform vectorized representation on the multi-modal information of the target object to obtain at least two vectors representing the target object; acquire category information of a plurality of preset categories, where the category information includes a vector representing a preset category; determine a correlation between the target object and the preset category based on the at least two vectors representing the target object and the vector representing the preset category; and acquire at least one target category whose correlation meets a second requirement from the plurality of preset categories.

Further, the information publishing device provided by the present embodiment may further include an expansion module and a vectorized representation module, where the expansion module is used to obtain textual information of a preset category; generate a consultation question based on the textual information; and use the consultation question to trigger a natural language processing model to expand the textual information of the preset category. The vectorized representation module is used to perform vectorized representation on the expanded textual information of the preset category to obtain a vector representing the preset category.

Further, the multi-modal information of the target object includes first textual information and first image information of the target object; at least two vectors representing the target object include: a first text vector obtained by vectorized representation of the first textual information and a first image vector obtained by vectorized representation of the first image information; correspondingly,
the determination module 12 is specifically used to, when determining the correlation between the target object and the preset category based on the at least two vectors representing the target object and the vector representing the preset category:
determine a first similarity between the target object and the category according to the first text vector and the vector representing the preset category; determine a second similarity between the target object and the category according to the first image vector and the vector representing the preset category; and determine the correlation between the target object and the preset category based on the first similarity and/or the second similarity.

Further, the determination module 12 is specifically used to, when determining the publishing category to which the target object belongs according to the category to which at least one reference object belongs and at least one target category:
merge the category to which the at least one reference object belongs and the at least one target category to obtain a candidate category list without duplicate categories; sort categories in the candidate category list; and use a category at a set position in the sorting order as the publishing category to which the target object belongs.

Further, the target object is a product to be published on an e-commerce platform.

It should be noted here that: the information publishing device provided in the above embodiment can implement the technical solution described in the corresponding method embodiment above, and for the specific implementation principles of the above modules or units, reference may be made to the content in the corresponding method embodiment above, which will not be repeated here.

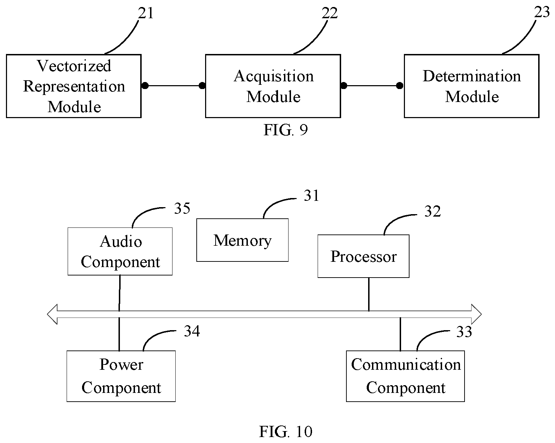

FIG. 9 illustrates a schematic structural diagram of an information category determination apparatus provided by another embodiment of the present disclosure. As shown in FIG. 9, the information category determination apparatus includes: a vectorized representation module 21, an acquisition module 22, and a determination module 23. The vectorized representation module 21 is used for performing vectorized representation on multi-modal information of a target object to obtain at least two vectors representing the target object. The acquisition module 22 is used for acquiring a plurality of preset vectors, where one preset vector represents one category or one reference object. The determination module 23 is used for determining a preset vector related to the target object based on the at least two vectors representing the target object and the plurality of preset vectors; and determining a category to which the target object belongs according to a category represented by the preset vector related to the target object or a category to which the reference object belongs.

Further, the plurality of preset vectors include:
at least two vectors representing the reference object, obtained by performing vectorized representation on multi-modal information of the reference object; and/or
a vector representing the preset category, obtained by performing vectorized representation on a textual description of the preset category.

Further, the information category determination device provided by the present embodiment may further include an execution module. The execution module is used to obtain target object attribute information corresponding to the category to which the target object belongs; and use the category to which the target object belongs and the target object attribute information as publishing information of the target object to perform a publishing operation.

It should be noted here that: the information category determination device provided in the above embodiment can implement the technical solution described in the corresponding method embodiment above, and for the specific implementation principles of the above modules or units, reference may be made to the content in the corresponding method embodiment above, which will not be repeated here.

Another embodiment of the present disclosure provides an information publishing device, the device comprising an acquisition module and a display module. Here, the acquisition module is used to, in response to an operation of a user on a target object, obtain multi-modal information of the target object. The display module is used to display a publishing category to which the target object belongs based on the multi-modal information; where the publishing category is determined based on a category to which at least one reference object belongs and/or at least one target category, and the at least one reference object and/or the at least one target category have a correlation with the multi-modal information; and display target object attribute information corresponding to the publishing category for verification, and perform a publishing operation for the target object after the verification is passed.

Further, the display module is specifically used to, when displaying the publishing category to which the target object belongs based on the multi-modal information:
obtain object information of a plurality of preset reference objects and category information of a plurality of preset categories; obtain at least one reference object related to the target object from the plurality of reference objects according to the multi-modal information and the object information of the plurality of reference objects; obtain at least one target category related to the target object from the plurality of preset categories according to the multi-modal information; and determine the publishing category to which the target object belongs based on the category to which the at least one reference object belongs and the at least one target category.

It should be noted here that: the information publishing device provided in the above embodiment can implement the technical solution described in the corresponding method embodiment above, and for the specific implementation principles of the above modules or units, reference may be made to the content in the corresponding method embodiment above, which will not be repeated here.

Another embodiment of the present disclosure provides an information publishing device, the information publishing device comprising an acquisition module, a determination module, an execution module, and a display module. Here, the acquisition module is used to, in response to an operation of a user on a target object, obtain multi-modal information of the target object; the determination module is used to determine a publishing category to which the target object belongs based on the multi-modal information; where the publishing category is determined based on a category to which at least one reference object belongs and/or at least one target category, and the at least one reference object and/or the at least one target category have a correlation with the multi-modal information. The execution module is used to obtain target object attribute information corresponding to the publishing category; and perform a publishing operation for the target object according to the publishing category and the target object attribute information. The display module is used to display a preview page of the target object after publishing.

It should be noted here that: the information publishing device provided in the above embodiment can implement the technical solution described in the corresponding method embodiment above, and for the specific implementation principles of the above modules or units, reference may be made to the content in the corresponding method embodiment above, which will not be repeated here.

Another embodiment of the present disclosure provides a product publishing apparatus, the product publishing apparatus comprising: an acquisition module, a determination module, an execution module, and a display module; where the acquisition module is used for, in response to an operation of a merchant on a product, acquiring multi-modal information of the product; the determination module is used for determining a publishing category to which the product belongs based on the multi-modal information; where the publishing category is determined based on a category to which at least one reference product belongs and/or at least one target category, and the at least one reference product and/or the at least one target category have a correlation with the multi-modal information; and the acquisition module is further used for acquiring product attribute information corresponding to the publishing category; the execution module is used for performing a publishing operation for the product according to the publishing category and the product attribute information; and the display module is used for displaying a preview page after the product is published.

It should be noted here that the product publishing apparatus provided in the above embodiment can implement the technical solution described in the corresponding method embodiment, and the specific implementation principles of the modules or units can refer to the content in the corresponding method embodiment, which will not be repeated here.

Another embodiment of the present disclosure provides a product batch publishing apparatus. The product batch publishing apparatus comprises: an acquisition module, a determination module, and an execution module. Where the acquisition module is used for, in response to an operation of a merchant triggering batch publishing of products, acquiring multi-modal information of a plurality of products to be batch-published. The determination module is used for respectively determining corresponding publishing information for the plurality of products. The execution module is used for performing a batch publishing operation, so that the merchant can batch-view preview pages after the plurality of products are published;

Here, when determining the corresponding publishing information for one of the plurality of products, the determination module is specifically used for:
determining a publishing category to which the product belongs based on the multi-modal information of the product; where the publishing category is determined based on a category to which at least one reference object belongs and/or at least one target category, and the at least one reference object and/or the at least one target category have a correlation with the multi-modal information of the product;
attaching corresponding product attribute information to the publishing category to which the product belongs based on the multi-modal information of the product, to obtain the publishing information of the product.

Further, when acquiring the multi-modal information of the plurality of products to be batch-published in response to the operation of the merchant triggering the batch publishing of products, the acquisition module is specifically used for: displaying a batch publishing page; in response to an input operation of the merchant on the batch publishing page, acquiring a batch publishing file input by the merchant; and reading the multi-modal information of the plurality of products from the batch publishing file.

Further, the plurality of products include products of different categories; the multi-modal information of the products contains product category information. Correspondingly, the product batch publishing apparatus further comprises a grouping module. Here, the grouping module is used for grouping products with the same product category information into one group. Correspondingly, when determining the publishing category to which a product belongs based on the multi-modal information of the product, the determination module determines the publishing category to which one product in a group belongs, and other products in the same group belong to the same publishing category.

It should be noted here that the product batch publishing apparatus provided in the above embodiment can implement the technical solution described in the corresponding method embodiment, and the specific implementation principles of the modules or units can refer to the content in the corresponding method embodiment, which will not be repeated here.

The apparatus embodiments described above are merely illustrative, where the units described as separate components may or may not be physically separate, and the components displayed as units may or may not be physical units, that is, they may be located in one place or may be distributed over a plurality of network units. Some or all of the modules may be selected according to actual needs to achieve the purpose of the solution of this embodiment. Those of ordinary skill in the art can understand and implement it without creative labor.

FIG. 10 illustrates a schematic principle diagram of an electronic device provided in an embodiment of the present disclosure. The electronic device comprises a processor 32 and a memory 31. Here, the memory 31 is used for storing one or more computer programs; the processor 32 is coupled to the memory 31 for executing at least one or more computer programs to implement the steps in the methods provided in the embodiments of the present disclosure.

The memory 31 may be implemented by any type of volatile or non-volatile storage device or a combination thereof, such as a static random access memory (SRAM, Static Random Access Memory), an electrically erasable programmable read-only memory (EEPROM, Electrically Erasable Programmable Read-Only Memory), an erasable programmable read-only memory (EPROM, Erasable Programmable Read-Only Memory), a programmable read-only memory (PROM, Programmable Read-Only Memory), a read-only memory (ROM, Read-Only Memory), a magnetic memory, a flash memory, a magnetic disk, or an optical disk.

Further, as shown in FIG. 10, the electronic device further comprises other components such as a communication component 33, a power component 34, and an audio component 35. FIG. 10 only schematically shows some components, which does not mean that the electronic device only comprises the components shown in FIG. 10.

Correspondingly, an embodiment of the present disclosure further provides a computer-readable storage medium, on which computer-executable instructions are stored, and when the computer-executable instructions are executed by a computer, the method steps or functions provided in the embodiments of the present disclosure can be implemented.

An embodiment of the present disclosure further provides a computer program product, comprising a computer program, where the computer program, when executed by a processor, implements the method in any of the above method embodiments.

Finally, it should be noted that the above embodiments are only used to illustrate the technical solutions of the present disclosure, rather than to limit them; although the present disclosure has been described in detail with reference to the foregoing embodiments, those of ordinary skill in the art should understand that they can still modify the technical solutions recorded in the foregoing embodiments, or perform equivalent replacement for some of the technical features therein; and these modifications or replacements do not make the essence of the corresponding technical solutions deviate from the spirit and scope of the technical solutions of the embodiments of the present disclosure.

## Claims

1. An information publishing method, comprising:
acquiring at least one reference object related to the target object based on multi-modal information of the target object;
determining at least one target category related to the target object based on the multi-modal information of the target object;
determining a publishing category to which the target object belongs, based on a category to which the at least one reference object belongs and the at least one target category;
obtaining target object attribute information corresponding to the publishing category;
using the publishing category and the target object attribute information as the publishing information of the target object, and performing a publishing operation.

2. The method of claim 1, wherein obtaining at least one reference object related to the target object based on multi-modal information of the target object comprises:
performing vectorized representation on the multi-modal information of the target object to obtain at least two vectors representing the target object;
obtaining object information of a plurality of preset reference objects, wherein the object information of a reference object comprises at least two vectors representing the reference object;
determining a correlation between the target object and the reference object based on the at least two vectors representing the target object and the at least two vectors representing the reference objects;
obtaining, from the plurality of preset reference objects, at least one reference object whose correlation meets a first requirement.

3. The method of claim 2, wherein performing vectorized representation on the multi-modal information of the target object comprises:
using the multi-modal information of the target object as an input of a calculation model, and executing the calculation model to output the at least two vectors representing the target object.

4. The method of claim 2, wherein the multi-modal information of the target object comprises first textual information and first image information of the target object; and the at least two vectors representing the target object comprise: a first text vector obtained by performing vectorized representation on the first textual information and a first image vector obtained by performing vectorized representation on the first image information;
the multi-modal information of the reference object comprises second textual information and second image information of the reference object, and the at least two vectors representing the reference object comprise: a second text vector obtained by performing vectorized representation on the second textual information and a second image vector obtained by performing vectorized representation on the second image information; and
determining the correlation between the target object and the reference object based on the at least two vectors representing the target object and the at least two vectors representing the reference object comprises:
determining a first similarity between the target object and the reference object according to the first text vector and the second text vector;
determining a second similarity between the target object and the reference object according to the first image vector and the second image vector;
determining the correlation between the target object and the reference object according to the first similarity and the second similarity.

5. The method of claim 4, wherein the method further comprises:
determining a third similarity between the target object and the reference object according to the first text vector and the second image vector;
determining a fourth similarity between the target object and the reference object according to the first image vector and the second text vector;
when determining the correlation between the target object and the reference object, the correlation is determined according to the first similarity, the second similarity, the third similarity, and the fourth similarity.

6. The method of any one of claims 1 to 5, wherein determining at least one target category related to the target object based on the multi-modal information of the target object comprises:
performing vectorized representation on the multi-modal information of the target object to obtain at least two vectors representing the target object;
obtaining category information of a plurality of preset categories, wherein the category information comprises a vector representing a preset category;
determining a correlation between the target object and a preset category based on at least two vectors representing the target object and a vector representing the preset category;
obtaining, from the plurality of preset categories, at least one target category whose correlation meets a second requirement.

7. The method according to claim 6, wherein the method further comprises:
obtaining textual information of a preset category;
generating an inquiry question based on the textual information;
triggering a natural language processing model using the inquiry question to expand the textual information of the preset category;
performing vectorized representation on the expanded textual information of the preset category to obtain a vector representing the preset category.

8. The method according to claim 6, wherein the multi-modal information of the target object comprises first textual information and first image information of the target object; the at least two vectors representing the target object comprise: a first text vector obtained by performing vectorized representation on the first textual information and a first image vector obtained by performing vectorized representation on the first image information; and
determining the correlation between the target object and the preset category based on the at least two vectors representing the target object and the vector representing the preset category comprises:
determining a first similarity between the target object and the category according to the first text vector and the vector representing the preset category;
determining a second similarity between the target object and the category according to the first image vector and the vector representing the preset category;
determining the correlation between the target object and the preset category based on the first similarity and/or the second similarity.

9. The method according to any one of claims 1 to 8, wherein determining the publishing category to which the target object belongs according to the category to which the at least one reference object belongs and the at least one target category comprises:
merging the category to which the at least one reference object belongs and the at least one target category to obtain a candidate category list without duplicate categories;
sorting categories in the candidate category list;
taking a category whose sorting order is at a set position as the publishing category to which the target object belongs.

10. The method according to any one of claims 1 to 9, wherein the target object is a product to be published on an e-commerce platform.

11. An information category determination method, comprising:
performing vectorized representation on multi-modal information of a target object to obtain at least two vectors representing the target object;
obtaining a plurality of preset vectors, wherein one preset vector represents one category or one reference object;
determining a preset vector related to the target object based on at least two vectors representing the target object and the plurality of preset vectors;
determining a category to which the target object belongs according to a category represented by the preset vector related to the target object or a category to which a reference object belongs.

12. The method of claim 11, wherein the plurality of preset vectors comprise:
at least two vectors representing a reference object obtained by performing vectorized representation on multi-modal information of the reference object; and/or
a vector representing a preset category obtained by performing vectorized representation on a textual description of the preset category.

13. The method of claim 11 or 12, wherein the method further comprises:
obtaining target object attribute information corresponding to the category to which the target object belongs;
performing a publishing operation by using the category to which the target object belongs and the target object attribute information as publishing information of the target object.

14. An information publishing method, comprising:
in response to an operation of a user on a target object, obtaining multi-modal information of the target object;
displaying a publishing category to which the target object belongs based on the multi-modal information; wherein the publishing category is determined based on a category to which at least one reference object belongs and/or at least one target category, and the at least one reference object and/or the at least one target category have a correlation with the multi-modal information;
displaying target object attribute information corresponding to the publishing category for verification, and performing a publishing operation on the target object after the verification is passed.

15. The method of claim 14, wherein displaying the publishing category to which the target object belongs based on the multi-modal information comprises:
obtaining object information of a plurality of preset reference objects and category information of a plurality of preset categories;
obtaining at least one reference object related to the target object from the plurality of reference objects according to the multi-modal information and the object information of the plurality of reference objects;
obtaining at least one target category related to the target object from the plurality of preset categories according to the multi-modal information;
determining the publishing category to which the target object belongs based on the category to which the at least one reference object belongs and the at least one target category.

16. A product publishing method, comprising:
in response to an operation of a merchant on a product, obtaining multi-modal information of the product;
displaying a publishing category to which the product belongs based on the multi-modal information; wherein the publishing category is determined based on a category to which at least one reference product belongs and/or at least one target category, and the at least one reference product and/or the at least one target category have a correlation with the multi-modal information;
displaying product attribute information corresponding to the publishing category for verification, and performing a publishing operation for the product after the verification is passed to publish the product to an e-commerce platform.

17. An information publishing method, comprising:
in response to an operation of a user on a target object, obtaining multi-modal information of the target object;
determining a publishing category to which the target object belongs based on the multi-modal information; wherein the publishing category is determined based on a category to which at least one reference object belongs and/or at least one target category, and the at least one reference object and/or the at least one target category have a correlation with the multi-modal information;
obtaining target object attribute information corresponding to the publishing category;
performing a publishing operation for the target object according to the publishing category and the target object attribute information;
displaying a preview page after the target object is published.

18. A product publishing method, comprising:
in response to an operation of a merchant on a product, obtaining multi-modal information of the product;
determining a publishing category to which the product belongs based on the multi-modal information; wherein the publishing category is determined based on a category to which at least one reference product belongs and/or at least one target category, and the at least one reference product and/or the at least one target category have a correlation with the multi-modal information;
obtaining product attribute information corresponding to the publishing category;
performing a publishing operation for the product according to the publishing category and the product attribute information;
displaying a preview page after the product is published.

19. A product batch publishing method, comprising:
in response to an operation of a merchant triggering batch publishing of products, obtaining multi-modal information of a plurality of products to be batch-published;
determining corresponding publishing information for each of the plurality of products;
performing a batch publishing operation, so that the merchant batch-reviews preview pages after the plurality of products are published;
wherein determining corresponding publishing information for one product among the plurality of products comprises:
determining a publishing category to which the product belongs based on multi-modal information of the product; wherein the publishing category is determined based on a category to which at least one reference object belongs and/or at least one target category, and the at least one reference object and/or the at least one target category have a correlation with the multi-modal information of the product;
attaching corresponding product attribute information to the publishing category to which the product belongs based on the multi-modal information of the product, to obtain the publishing information of the product.

20. The method of claim 19, wherein obtaining multi-modal information of a plurality of products to be batch published in response to a merchant triggering an operation of product batch publishing comprises:
displaying a batch publishing page;
in response to an input operation of the merchant on the batch publishing page, obtaining a batch publishing file input by the merchant;
reading the multi-modal information of the plurality of products from the batch publishing file.

21. The method of claim 19 or 20, wherein the plurality of products include products of different categories; the multi-modal information of the products contains product category information; and
the method further comprises:
grouping products with identical product category information into one group;
when determining a publishing category to which a product belongs based on the multi-modal information of the product, determining a publishing category to which one product in a group belongs, and determining the other products in the same group belong to the same publishing category.

22. An information publishing system, comprising:
a client, configured to send multi-modal information of a target object to a server in response to an operation of a user for the target object;
a server, configured to obtain at least one reference object and/or at least one target category having a correlation with the target object according to the multi-modal information; determine a publishing category to which the target object belongs according to a category to which the at least one reference object belongs and/or the at least one target category; and determine target object attribute information corresponding to the publishing category;
the client, configured to display the publishing category and the target object attribute information corresponding to the publishing category for verification; and in response to a verification pass instruction, trigger the server to perform a publishing operation for the target object based on the publishing category and the target object attribute information corresponding to the publishing category.

23. An information publishing system, comprising:
a client, configured to send multi-modal information of a target object to a server in response to an operation of a user for the target object;
the server being configured to: obtain at least one reference object and/or at least one target category having a correlation with the target object based on multi-modal information of the target object; determine a publishing category to which the target object belongs based on a category to which the at least one reference object belongs and/or the at least one target category; obtain target object attribute information corresponding to the publishing category; and perform a publishing operation for the target object based on the publishing category and the target object attribute information;
the client being configured to display a preview page after the target object is published.

24. An electronic device, comprising: a memory and a processor, wherein,
the memory is configured to store a computer program;
the processor is coupled to the memory and configured to execute the computer program stored in the memory to implement steps in the information publishing method of any one of claims 1 to 10, or to implement steps in the information category determination method of any one of claims 11 to 13, or to implement steps in the information publishing method of claim 14, 15, or 17, or to implement the product publishing method of claim 16 or 18, or to implement the product batch publishing method of any one of claims 19 to 21.

25. A computer-readable storage medium, wherein the computer-readable storage medium stores computer-executable instructions, and when the computer-executable instructions are executed by a processor, the computer-executable instructions are used to implement the method of any one of claims 1 to 21.

26. A computer program product, comprising a computer program, wherein the computer program, when executed by a processor, implements the method according to any one of claims 1 to 21.
